# EUROPÄISCHE PATENTANMELDUNG

(11) **EP 2 695 664 A1**
(43) Veröffentlichungstag der Anmeldung: **12.02.2014**
(21) Anmeldenummer: 13179113.9
(22) Anmeldetag: 02.08.2013
(51) Int. Cl.: B01D 53/88, B01D 49/00, B01J 23/06, B01J 23/14, B01J 35/00, B01J 35/02, B03C 3/28, F02M 35/02

(54) **Verfahren zur Luftreinigung mit einem photokatalytisch aktiven Material**

(30) Priorität: 10.08.2012 EP 12180105
(71) Anmelder: Nanoenergy GmbH, 85667 Oberpframmern (DE)
(72) Erfinder: Kummerer Robert, 5400Hallein (AT); Kummerer Gilbert, 5400 Hallein (AT); Hahnekamp Richard, 85667 Oberpframmern (DE)
(74) Vertreter: Dey, Michael

(57) **Zusammenfassung**

Die Erfindung betrifft ein Verfahren zur Feinstaubreduktion aus einem gasförmigen Medium ohne UV Licht mittels eines photokatalytischen Materials umfassend einen Photokatalysator.

## Beschreibung

Die Erfindung betrifft ein Verfahren zur Feinstaubreduktion unter Einsatz eines Photokatalysators sowie einen Photokatalysator, der auch in Abwesenheit von UV-Licht aktiv ist.

Photokatalysatoren werden in einer photoassistierten katalytischen Reaktion angeregt. Dies wird beispielsweise dazu genutzt, um an der Oberfläche von Photokatalysatoren Sauerstoffradikale zu erzeugen, die dann wiederum Schadstoffe oxidieren und somit unschädlich machen können. Ein bekanntes photokatalytisch aktives Material ist Titandioxid (TiO₂). Zur Anregung von Titandioxid ist UV-Licht notwendig.

Eine Aufgabe der vorliegenden Erfindung war es, photokatalytische Effekte für neue Anwendungen zu nutzen und zudem neue Photokatalysatoren bereitzustellen, die auch in Abwesenheit von UV-Licht photokatalytisch aktiv sind.

Diese Aufgabe wird erfindungsgemäß gelöst durch ein Verfahren zur Feinstaubreduktion, welches dadurch gekennzeichnet ist, dass Feinstaub aus einem gasförmigen Medium ohne UV-Licht mittels eines photokatalytischen Materials umfassend einen Photokatalysator abgetrennt wird.

Insbesondere betrifft die Erfindung ein Verfahren zur Feinstaubreduktion, welches dadurch gekennzeichnet ist, dass Feinstaub aus einem gasförmigen Medium mittels eines photokatalytischen Materials umfassend einen Photokatalysator bei Tageslicht ohne UV-Licht-Anteile abgetrennt wird.

Erfindungsgemäß wurde festgestellt, dass durch Nutzung der photoassistierten katalytischen Reaktion von photokatalytischen Materialien eine elektrostatische Anziehung von Feinstäuben erfolgt, die dadurch aus gasförmigen Medien, insbesondere Luft, abgetrennt werden können. Dabei wird das photokatalytische Material durch Einwirkung von Licht geeigneter Wellenlänge in einen angeregten Katalysator-Zustand versetzt. Dabei ist zur Aufrechterhaltung der Reaktion eine fortgesetzte Lichteinwirkung erforderlich.

Photokatalytisches Material wird hierin auch als photokatalytisch aktives Material bezeichnet.

Die erfindungsgemäß einsetzbaren photokatalytischen Materialien umfassen vorzugsweise einen Photokatalysator und optional weitere Materialien wie beispielsweise Bindemittel. In einer bevorzugten Ausführungsform der Erfindung besteht das photokatalytische Material aus einem Photokatalysator. In einer noch mehr bevorzugten Ausführungsform umfasst das photokatalytische Material einen Photokatalysator sowie ein Bindemittel.

Der Photokatalysator, der auch als photokatalytisch aktive Substanz bezeichnet werden kann, weist vorzugsweise Halbleitereigenschaften auf. In einem photokatalytisch aktiven Halbleiter können durch Anregung durch Licht-Photonen Elektronen in einen energetisch höheren Zustand versetzt werden. Ist die Energie des einstrahlenden Photons ausreichend groß, so kann ein Elektron von einem energetischen Zustand, beispielsweise von einem energetischen Grundzustand, bei Raumtemperatur in den energetischen Zustand des Leitungsbandes wechseln. An der ursprünglichen Stelle des Elektrons (negativer Ladungsträger) entsteht ein Defektelektron oder Loch, also ein positiver Ladungsträger. An dieser Stelle kann ein benachbartes Elektron wechseln. Bei diesem Vorgang entsteht wieder ein Defektelektron usw. In der Folge verteilen sich die positiven und negativen Ladungsträger und können an die Oberfläche des Materials diffundieren. Dort entstehen nun spezielle Ladungsverteilungen. Diese Ladungsverteilungen bewirken eine elektrostatische Anziehung, durch welche Feinstäube aus Luft abgetrennt werden können. Dieser Effekt wurde erstmals von den Erfindern der vorliegenden Anmeldung festgestellt. Insbesondere können sich erfindungsgemäß an die photokatalytisch aktiven Oberflächen Feinstaubpartikel durch die vorhandenen Ladungsverteilungen anlagern.

Erfindungsgemäß handelt es sich bei dem Photokatalysator vorzugsweise um ein Material, welches auch bei Bestrahlung mit sichtbarem Licht, also insbesondere auch in Abwesenheit von UV-Licht, aktiv ist. Die Ladungsverteilungen entstehen dabei durch Einstrahlung von Licht im IR oder sichtbaren Wellenlängenbereich, insbesondere durch Einstrahlung von Licht im sichtbaren Wellenlängenbereich (4.00 - 750 nm) und auch ohne Einstrahlung von UV-Licht. Solche Materialien können somit auch zur Feinstaubreduktion in Innenräumen, beispielsweise in Wohninnenräumen oder Fahrzeuginnenräumen, eingesetzt werden, in denen bei Verwendung von herkömmlichen Photokatalysatoren wie beispielsweise Titandioxid aufgrund des Fehlens von UV-Strahlung keine photoassistierte katalytische Reaktion auftritt.

Das erfindungsgemäße Verfahren kann bei Tageslicht durchgeführt werden. Insbesondere wird es bei Tageslicht ohne zusätzliches UV-Licht durchgeführt. Ein solches Tageslicht ohne UV-Licht liegt z.B. in Gebäudeinnenräumen oder in Fahrzeuginnenräumen vor, in denen das Sonnenlicht zuvor eine Glasscheibe passieren muß. Durch eine Glasscheibe wird aber der UV-Lichtanteil des Sonnenlichts zurückgehalten. Es ist erfindungsgemäß möglich, das Verfahren bei Tageslicht mit abgeschwächtem Anteil an UV-Licht, insbesondere mit einem um wenigstens 80 %, mehr bevorzugt wenigstens 90 %, noch mehr bevorzugt wenigstens 95 % und insbesondere wenigstens 98 %, am meisten bevorzugt wenigstens 99 % abgeschwächtem Anteil an Licht mit Wellenlängen von < 350 nm, bevorzugt < 380 nm und insbesondere < 390 nm durchzuführen. Ein Beispiel für eine solche bevorzugte Ausführungsform ist die Durchführung in Innenräumen, bei denen das Tageslicht zunächst durch Glas, beispielsweise Fensterglas, durchtreten muss, welches keine oder nur eine sehr geringe Durchlässigkeit für Licht im UV-Bereich aufweist. In einer bevorzugten Ausführungsform wird das Verfahren bei Tageslicht ohne UV-Lichtanteile durchgeführt. Dies beispielsweise, wenn Tageslicht durch dickeres Glas durchtritt und somit der UV-Lichtanteil vollständig abgetrennt ist.

Das erfindungsgemäße Verfahren kann aber auch bei Kunstlicht durchgeführt werden, insbesondere mit Kunstlicht mit einer Wellenlänge von 380 nm bis 800 nm, insbesondere von 400 bis 700 nm.

Das erfindungsgemäße Verfahren kann insbesondere auch in Umgebungen durchgeführt werden, in denen kein zusätzliches UV-Licht eingestrahlt wird, und insbesondere in Umgebungen, in denen kein UV-Licht vorhanden ist. So kann das erfindungsgemäße Verfahren insbesondere in Abwesenheit von Licht mit einer Wellenlänge von < 400 nm, insbesondere < 380 nm, noch mehr bevorzugt < 350 nm durchgeführt werden.

Ohne UV-Licht, sowie ohne UV-Licht-Anteile im Sinne der Erfindung bedeutet insbesondere, dass der Gesamtenergieanteil an eingestrahltem Licht mit einer Wellenlänge < 400 nm, insbesondere < 380 nm, weniger als 2%, mehr bevorzugt weniger als 1 %, noch mehr bevorzugt weniger als 0, 1 % und am meisten bevorzugt 0% bezogen auf die gesamte eingestrahlte Lichtenergie beträgt.

Erfindungsgemäß bevorzugt wird ein Photokatalysator eingesetzt, der eine Bandlücke im sichtbaren Bereich, also bei ≤ 3,2 eV entsprechend ≥ 390 nm, insbesondere bei ≤ 3,1 eV entsprechend ≥ 400 nm aufweist. Solche Photokatalysatoren weisen eine Aktivierungsenergie im sichtbaren Wellenlängenbereich auf und können dadurch ohne UV-Licht-Anteil angeregt werden.

Erfindungsgemäß bevorzugt umfasst der Photokatalysator wenigstens eines der Elemente Sn, Zn, Bi, Ga, Ge, In, Ta, Ti, V, W, Sb oder Tl, insbesondere wenigstens eines der Elemente Sn oder Zn und noch mehr bevorzugt Zn.

In einer bevorzugten Ausführungsform umfasst der Photokatalysator Sn. In einer weiteren bevorzugten Ausführungsform umfasst der Photokatalysator Zn. In noch einer weiteren bevorzugten Ausführungsform umfasst der Photokatalysator Sn und Zn.

In dem Photokatalysator liegen die Elemente vorzugsweise in Form von Verbindungen mit Halbleitereigenschaften vor, beispielsweise als Oxide. Besonders bevorzugt umfasst der Photokatalysator Zinnoxid (SnO₂) oder/und Zinkoxid (ZnO), insbesondere ZnO.

Bevorzugt wird ein Photokatalysator eingesetzt, der neben dem Grundelement mit einem oder mehreren weiteren Elementen dotiert oder beladen ist, um die erforderliche Bandlücke in einem Bereich bei ≤ 3,2 eV, insbesondere bei ≤ 3,1 eV aufzuweisen.

Ein erfindungsgemäß bevorzugt als Photokatalysator eingesetztes Material ist SnO₂. SnO₂ hat eine energetische Bandlücke von 3,5 bis 3,7 eV korrespondierend zu einem Wellenlängenbereich von 354 bis 335 nm. Beladenes SnO₂ hat eine energetische Bandlücke von etwa 2,9 eV korrespondierend zu einer Wellenlänge von 428 nm. Somit kann solches SnO₂ durch blaues Licht im elektromagnetischen Spektrum des sichtbaren Lichts angeregt werden.

Ein weiterhin bevorzugt als Photokatalysator eingesetztes Material ist ZnO. ZnO selbst hat eine energetische Bandlücke von etwa 3,37 eV korrespondierend zu einer Wellenlänge von 368 nm. Beladenes ZnO weist zumindest zwei aktive Bandlücken bei ca. 1,8 eV (690 nm) sowie bei ca. 2,7 eV (460 nm) auf, und kann somit mit sichtbarem Licht angeregt werden.

In einer besonders bevorzugten Ausführungsform wird als Photokatalysator ein Gemisch aus SnO₂ und ZnO eingesetzt, insbesondere in einem Gewichtsverhältnis von 1 : 10 bis 10 : 1, mehr bevorzugt von 1 : 3 bis 3 : 1.

Um die Nutzbarkeit der Photokatalysatoren im erfindungsgemäßen Verfahren weiter zu erhöhen, werden vorzugsweise die Bandlücken verringert.

Erfindungsgemäß ist es deshalb bevorzugt, einen Photokatalysator einzusetzen, der mit einem oder mehreren Elementen, insbesondere ausgewählt aus Co, C, N, P, S oder H dotiert ist. Bevorzugt wird ein Photokatalysator eingesetzt, der mit Co, C und/oder N, am meisten bevorzugt mit Co dotiert ist. Bei einer Dotierung werden Fremdatome in die Molekülstruktur des Photokatalysators eingebaut. Durch die Dotierung wird die Bandlücke und somit die Aktivierungsenergie herabgesetzt.

Besonders bevorzugt wird erfindungsgemäß als Photokatalysator mit Co dotiertes ZnO oder/und SnO₂, insbesondere mit Co dotiertes ZnO eingesetzt. Das Gewichtsverhältnis Zn : Co beträgt dabei vorzugsweise von 8 : 1 bis 15 : 1, insbesondere von 9 : 1 bis 11 : 1 und noch mehr bevorzugt von 9,5 : 1 bis 10,5 : 1. Es wurde erfindungsgemäß festgestellt, dass Co in die Kristallstruktur von ZnO eingebaut wird. Dabei konnten insbesondere dotierte ZnO-Photokatalysatoren mit Partikelgrößen in einem Bereich von ca. 50 nm bis 1,5 µm, insbesondere ca. 100 nm bis 1,2 µm hergestellt werden. Mit Co beladenes ZnO weist energetische Bandlücken bei etwa 1,8 eV sowie 2,7 eV auf, entsprechend einer Wellenlänge von 690 nm bzw. 460 nm. Aufgrund der Verschiebung der notwendigen Aktivierungsenergie in den sichtbaren Wellenlängenbereich können diese Materialien als Photokatalysator auch bei Bestrahlung mit Licht ohne jeglichen UV-Anteil eingesetzt werden.

Dotierte Photokatalysatoren können beispielsweise durch nasschemische oder thermische Verfahren erhalten werden.

In einer weiteren bevorzugten Ausführungsform wird der Photokatalysator mit einem oder mehreren Elementen, insbesondere ausgewählt aus Pb, Au, Ag, Pt, Al, Cu, Sb, Mo oder Cd, vorzugsweise ausgewählt aus Au, Pt, Ag, Sb, Fe, Al, Cd, Cu oder Pb beladen. Am meisten bevorzugt ist eine Beladung mit Au oder/und Pt.

Besonders bevorzugt erfolgt eine Beladung mit Nanopartikeln, insbesondere mit Nanopartikeln, welche eine mittlere Partikelgröße von < 10 nm, insbesondere < 5 nm aufweisen. In einer besonders bevorzugten Ausführungsform erfolgt eine Beladung mit Au- und/oder Pt-Nanopartikeln, welche eine mittlere Partikelgröße ≤ 10 nm, insbesondere ≤ 5 nm auweisen. Bei einer Beladung werden kleinere Partikel durch Oberflächeneffekte in einen stabilen Kontakt mit größeren Partikeln gebracht. Auch durch eine Beladung wird die Bandlücke und somit die Aktivierungsenergie der Wirksubstanz herabgesetzt.

In einer weiteren bevorzugten Ausführungsform werden für den Photokatalysator verschiedene Partikel und/oder verschiedene Partikelgrößen vermischt. Bevorzugt ist beispielsweise die Mischung von ZnO und SnO₂. Weiterhin werden vorzugsweise gleiche oder unterschiedliche Materialien in verschiedenen Partikelgrößen eingesetzt, beispielsweise in Mischungen von Partikelgrößen < 50 nm, in Partikelgrößen 50 bis < 150 nm und in Partikelgrößen 150 bis 300 nm. Es wurde festgestellt, dass auch die Partikelgröße einen Einfluss auf die Bandlücke hat. So sind insbesondere kleine Partikel bevorzugt. Andererseits bieten größere Partikel mehr potenzielle Anlagerungsoberfläche für Feinstäube. Somit wird erfindungsgemäß bevorzugt ein Gemisch von verschiedenen Partikelgrößen zur Anwendung gebracht.

In einer besonders bevorzugten Ausführungsform umfasst das erfindungsgemäß eingesetzte photokatalytische Material
(i) einen Photokatalysator sowie
(ii) ein Bindemittel.

Der Photokatalysator wird vorzugsweise in Form von kleinen Partikeln eingesetzt. Vorzugsweise weist das photokatalytische Material eine Partikelgröße von ≤ 1000 nm, mehr bevorzugt ≤ 500 nm, noch mehr bevorzugt ≤ 300 nm, am meisten bevorzugt ≤ 150 nm und insbesondere ≤ 50 nm auf. Mit Partikelgröße ist hierin, soweit nichts anderes angegeben, jeweils der mittlere Partikeldurchmesser gemeint.

Als besonders geeignet haben sich dabei als Bindemittel Silane herausgestellt. Besonders geeignet sind Tetra-Alkoxysilane und im speziellen Tetra-Ethyl-Ortho-Silikate (TEOS). Die Silane weisen vorzugsweise einen SiO₂-Anteil von 5 bis 70 Mol-%, bevorzugt von 10 bis 50 Mol-% und insbesondere von 15 bis 30 Mol-% auf.

Als Lösemittel, beispielsweise zum Aufbringen des photokatalytischen Materials auf einen Untergrund werden vorzugsweise Alkohole, insbesondere primäre, sekundäre und tertiäre Alkohole sowie Wasser und Mischungen davon eingesetzt. Besonders bevorzugt werden primäre Alkohole eingesetzt, insbesondere Methanol, Ethanol oder Propanol.

Die zum Aufbringen des photokatalytischen Materials auf einem Untergrund vorgesehenen Zusammensetzungen umfassen weiterhin bevorzugt Tenside. Solche Tenside verhindern das Agglomerieren der Wirkpartikel, sodass die Zusammensetzung beispielsweise durch Sprühen aufgebracht werden kann.

Vorzugsweise wird das erfindungsgemäße Verfahren bei Licht mit einer Wellenlänge von 400 nm bis 800 nm durchgeführt.

In einer besonders bevorzugten Ausführungsform wird das erfindungsgemäße Verfahren zur Feinstaubreduktion in einem offenen System durchgeführt. Ein offenes System zeichnet sich insbesondere dadurch aus, dass die normale Luftzirkulation ausreicht. Die photokatalytisch aktiven Beschichtungen kommen dabei mit wenig bis keinem UV-Lichtanteil aus. Weitere Anforderungen, die von einem offenen System erfüllt werden müssen, sind gesundheitliche Unbedenklichkeit der Beschichtung sowie Abriebsbeständigkeit.

Insbesondere muss einem offenen System keine Fremdenergie zugeführt werden und es erfolgt keine Zwangsführung von Luftströmen, wie das bei geschlossenen Systemen, beispielsweise Klimaanlagen, der Fall ist. Bei geschlossenen Systemen befinden sich die photokatalytisch aktiven Oberflächen im Inneren eines Geräts. Die schadstoffbeladene Atmosphäre, beispielsweise Gase oder Bioaerosole, sind durch Zwangsluftführung an diesen Oberflächen vorbeigeführt. Die Platzierung der Oberflächen im Geräteinneren bei geschlossenen Systemen hat dort den Vorteil, dass diese mit starkem, gesundheitsschädlichem UV-Licht bestrahlt werden können. Eine solche Bestrahlung ist erfindungsgemäß aber gerade nicht erforderlich. Zusammenfassend kann festgehalten werden, dass die erfindungsgemäß bevorzugten offenen Beschichtungssysteme im Gegensatz zu herkömmlichen geschlossenen Systemen keine Zwangsluftführung und keine Bestrahlung mit für den Menschen gesundheitsschädlichen Wellenlängen und/oder Intensitäten von elektromagnetischer Strahlung benötigen.

Durch den erfindungsgemäß festgestellten Effekt können Feinstäube aus gasförmigen Medien, insbesondere aus Luft, entfernt werden. Bei Feinstäuben handelt es sich dabei insbesondere um Partikel, die in dem gasförmigen Medium, z.B. in Luft im Schwebezustand vorliegen (freischwebende Partikel), also insbesondere um Partikel mit einem mittleren Partikeldurchmesser von ≤ 50 µm. Bevorzugt weist der Feinstaub Partikel mit einer Größe von ≤ 40 µm auf. Als Feinstaub im Sinne der vorliegenden Erfindung werden insbesondere alle Partikel mit einem mittleren Partikeldurchmesser von ≤ 10 µm bezeichnet. Erfindungsgemäß können aber auch Feinstäube mit einer Partikelgröße ≤ 2 µm oder ≤ 350 nm und Ultrafeinstäube mit einer Partikelgröße ≤ 100 nm abgetrennt werden. Feinstaub im Sinne der vorliegenden Erfindung umfasst auch Ultrafeinstäube mit einer Partikelgröße ≤ 100 nm. Gerade bei Feinstäuben mit einem mittleren Partikeldurchmesser von ≤ 100 nm konnten hervorragende Ergebnisse erhalten werden. Feinstaub weist weiterhin vorzugsweise eine Partikelgröße von ≥ 1 nm, insbesondere ≥ 5 nm auf.

Unter Feinstaub wurden erfindungsgemäß aber auch Pollenkörner verstanden, die ebenfalls erfolgreich aus Luft abgetrennt werden konnten. Pollenkörner haben üblicherweise einen mittleren Partikeldurchmesser von 10 µm bis 30 µm.

Da die physikalischen Eigenschaften von Staubpartikeln stark von ihrer Form abhängen, beziehen sich die hierin angegebenen Partikeldurchmesser auf den aerodynamischen (Äquivalent-)Durchmesser. Bei dieser Bestimmung wird das aerodynamische Verhalten eines Partikels dem eines kugelförmigen Objektes gleichgesetzt.

Feinstäube können durch eine Vielzahl von natürlichen Vorgängen in die Atmosphäre freigesetzt werden, wie z.B. Rus, Winderosion oder durch mechanischen Abrieb. Auch biologische Aerosole fallen unter den Begriff Feinstaub, wie beispielsweise Pollen oder Pilzsporen. Beispiele für Ultrafeinstäube sind Abgase von Verbrennungsmotoren, sowie Abrieb durch Maschinen, wie z.B. Bremsbeläge.

Bevorzugt wird für das erfindungsgemäße Verfahren das photokatalytische Material auf einem Untergrund aufgebracht, der dann mit dem gasförmigen Medium in Kontakt gebracht wird. Geeignete Untergründe sind beispielsweise Glas, Kunststoff, textile Strukturen, Mauerwerk, Beton, Metall, Keramik, Holz oder/und Verbundwerkstoffe. Besonders bevorzugt wird als Untergrund Glas eingesetzt. Durch Beschichtung von Glasscheiben auf der Innenseite eines Gebäudes oder Fahrzeugs mit einem photokatalytischen Material, welches auch ohne UV-Licht aktiv ist, können Feinstäube kontinuierlich und ohne weitere Maßnahmen abgetrennt werden. Die photokatalytisch aktiven Beschichtungen kommen dabei vorzugsweise in Innenräumen, wie beispielsweise privaten Wohnräumen, öffentlichen Gebäuden, Krankenhäusern, Schulen etc. oder in Fahrzeugen wie beispielsweise Bussen, Fahrgastzellen von PKW und LKW, Wasserfahrzeugen oder Luftfahrtzeugen zum Einsatz.

Die Beschichtung erfolgt dabei vorzugsweise auf Wänden oder/und Decken, am meisten bevorzugt auf Fensterscheiben.

Das Aufbringen des photokatalytischen Materials auf den Untergrund kann dabei durch herkömmliche Verfahren, beispielsweise durch Sprühen, Walzen, Malen, Spraying, Tauchbeschichten oder Aufdampfen durchgeführt werden.

Die vorliegende Erfindung umfasst weiterhin einen Photokatalysator wie hierin beschrieben, der ohne UV-Licht aktiv ist.

In einer besonders günstigen Ausführungsform des erfindungsgemäßen Verfahrens zur Feinstaubreduktion wird Feinstaub aus Luft mittels einem auf Glasscheiben aufgebrachten photokatalytischen Material ohne UV-Licht abgetrennt. Für diese Anwendungsform hat der Photokatalysator vorzugsweise Partikelgrößen von kleiner als 300 nm, um für das menschliche Auge unsichtbar bzw. durchsichtig zu sein.

Die Erfindung wird durch die beigefügten Figuren und die nachfolgenden Beispiele weiter erläutert.

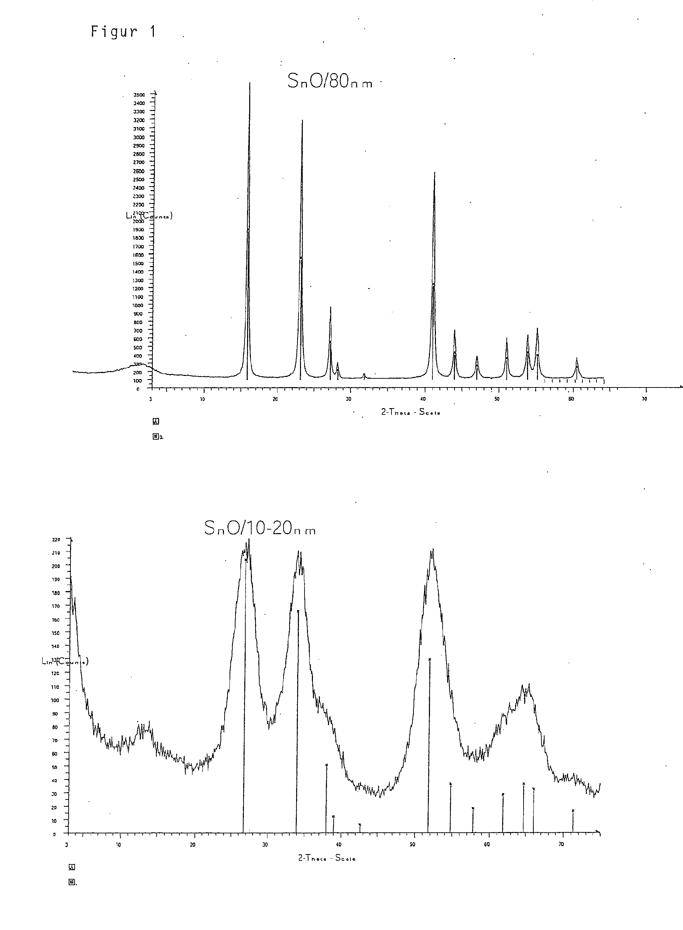

Figur 1 zeigt XRD-Analysen von SnO₂-Proben.

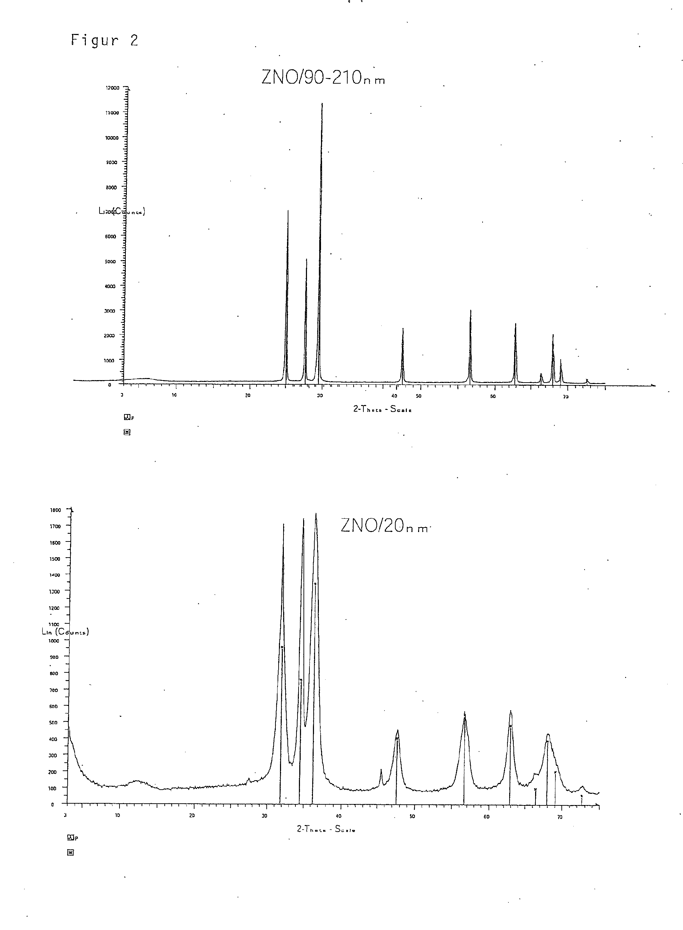

Figur 2 zeigt XRD-Analysen von ZnO-Proben.

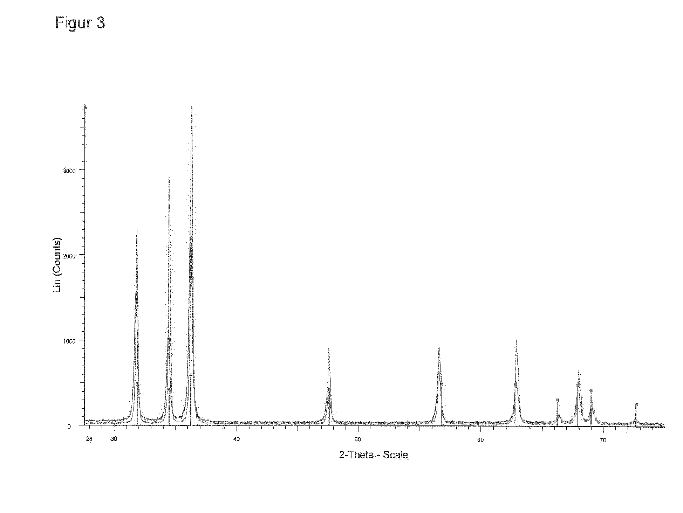

Figur 3 zeigt eine XRD-Messung von mit Co dotiertem ZnO. Deutlich ist der Einbau von Co in die Kristallstruktur von ZnO zu sehen.
Figur 4 zeigt eine Rasterelektronenmikroskopieaufnahme von mit Co dotierten ZnO-Partikeln.

### Beispiele

### Beispiel 1

### Mit Co dotiertes ZnO

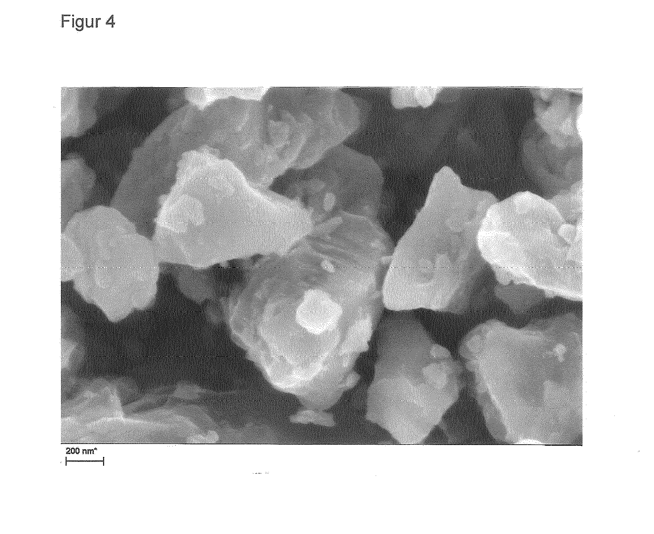

Mit zwei verschiedenen Methoden, nämlich nasschemisch sowie thermisch, wurde ZnO mit Co dotiert. Der Gewichtsanteil Zn : Co betrug dabei jeweils 10 : 1. Mittels energiedisperser Röntgenanalyse (EDX) wurde festgestellt, dass das Massenverhältnis der Elemente im dotierten Photokatalysator weitgehend dem Massenverhältnis der Edukte, also einem Verhältnis Zn : Co = 10 : 1, entsprach. Mittels UV/Vis/NIR-Analyse konnte festgestellt werden, dass mit Co dotiertes ZnO mindestens zwei aktive Bandlücken bei etwa 1,8 eV (690 nm) sowie 2,7 eV (460 nm) aufweist. Die erhaltenen Partikelgrößen des Photokatalysators liegen in einem Bereich von ca. 100 nm bis 1,2 µm (mittlerer Partikeldurchmesser), wie anhand von Rasterelektronenmikroskopie (REM) bestimmt werden konnte (siehe Figur 4). Anhand von durchgeführten Kathodolumineszenzmessungen konnte bestätigt werden, dass beinahe das gesamte ZnO umgesetzt wurde.

Die beiden mit ZnO dotierten photokatalytischen Materialien (einmal nasschemisch und einmal thermisch dotiert) wurden als Beschichtungen auf Untergründe aufgebracht. Feinstaubreduktionsmessungen ergaben eine Reduktion von Feinstäuben nach 30 Minuten auf 8 % bzw. 6,35 %. Bei Kontrollmessungen ohne das erfindungsgemäße photokatalytisch aktive Material lag der entsprechende Endwert deutlich höher, nämlich bei 15,84 %. Dies zeigt, dass mit den erfindungsgemäßen photokatalytisch aktiven Beschichtungen Luftreinigungsprozesse wesentlich beschleunigt werden können.

### Beispiel 2

### Reduktion der Feinstaubbelastung in einem KFZ-Innenraum

Die Messungen wurden an einem PKW der Marke Mini durchgeführt. Das Volumen der Fahrgastzelle beträgt 7,58 m³. Das Fahrzeug besitzt neben Front- und Heckscheibe sechs seitliche Fensterscheiben und ist dachseitig zusätzlich mit zwei Panoramafenstern ausgestattet. Das Verhältnis von Glasoberfläche zu Restfläche (Kunsstoffinnenverkleidung und Boden) beträgt 1 : 3,8.

Um eine durchschnittliche Strahlungsintensität von 3500 Lux zu erreichen, wurde das Testfahrzeug mithilfe von 6 HQ-Strahlern von außen beleuchtet. Dadurch, dass sich keine Lichtquelle im Fahrzeuginneren befand, konnte eine Aktivierung mit UV-Anteil der verwendeten Leuchtmittel ausgeschlossen werden.

In den Fahrzeuginnenraum wurden Feinstaubpartikel eingeleitet, die mittels eines Notstromaggregats (4-Takt Ottomotor) erzeugt worden sind. Der Aerosoleintrag erfolgt an der rechten Vordertür, die Probeluftentnahme erfolgt an der linken Hintertür. Zur Messung der Feinstaubbelastung wurde ein Kondenationkernzähler (CPC) der Firma Grimm verwendet, mit dem Aerosolpartikel mit einem Durchmesser zwischen 5 nm und 2 µm gezählt werden. Die Größenverteilung wurde mittels eines differenziellen Mobilitäts-Analysator (DMA), ebenfalls von der Firma Grimm bestimmt.

In der Versuchdurchführung wurden zunächst Kontrollmessungen ohne erfindungsgemäße Innenraumbeschichtung durchgeführt, wobei ein Wert für den natürlichen Abfall der Feinstaubkonzentration erhalten wurde. Die Abgase des Notstromaggregats wurden in das Fahrzeug für 2 Sekunden eingeleitet, um eine Partikelkonzentration von über 150 000 Partikel pro ccm zu erreichen. Die Feinstaubkonzentration wurde dann für 36 Minuten aufgezeichnet.

Anschließend wurden sämtliche Fensterscheiben innen mit Co-dotiertem ZnO (siehe Beispiel 1) beschichtet. Anschließend wurde erneut eine Messung, wie oben beschrieben durchgeführt.

Die so erhaltenen Werte über die Partikelreduktion wurden dem Kontrollmeßwerten gegenüber gestellt. Aus der Differenz läßt sich die Effizienz der photokatalyse-aktiven Beschichtung berechnet. Es wurde eine Verbesserung der Partikelreduktion von 4,27% nach 6 Minuten; 12,10% nach 12 Minuten, 15,94% nach 18 Minuten; 20,08% nach 24 Minuten; 23,02% nach 30 Minuten und 25,18% nach 36 Minuten festgestellt.

Das erfindungsgemäße Verfahren führt also zu einer deutlichen Reduktion der Feinstaubbelastung in der Fahrgastzelle eines KFZ.

### Beispiel 3

Reduktion der Feinsstaubbelastung durch photokatalytisch aktive Beschichtung in Innenräumen

Für die Messungen wurden zwei nebeneinander liegende identische Räume verwendet. Der eine Raum diente als Referenzraum, in dem anderen Raum wurden die Fenster mit Co-dotiertem ZnO (siehe Beispiel 1) beschichtet. Der Feinstaubeintrag erfolgte jeweils durch ein Notstromaggregat. Zur Messung der Feinstäube dienten ein CPC mit zugehörigem DMA (siehe Beispiel 2). Die Begasung mittels des 4-Takt Ottomotors des Notstromaggregats erfolgte ausreichend lange, um sicherzustellen, dass die Anfangskonzentration über 150 000 Partikel pro cm³ lag.

Anschließend wurden die Partikelkonzentrationen über einen Zeitraum von 120 Minuten gemessen. Die Messungen ergaben eine Effizienzsteigerung der Partikelreduktion für den mit Cobalt dotiertem Zinkoxid beschichteten Raum von 27,6%.

## Patentansprüche

1. Verfahren zur Feinstaubreduktion,
**dadurch gekennzeichnet,**
**dass** Feinstaub aus einem gasförmigen Medium ohne UV-Licht mittels eines photokatalytischen Materials umfassend einen Photokatalysator abgetrennt wird.

2. Verfahren zur Feinstaubreduktion,
**dadurch gekennzeichnet,**
**dass** Feinstaub aus einem gasförmigen Medium mittels eines photokatalytischen Materials umfassend einen Photokatalysator bei Tageslicht ohne UV-Licht-Anteile abgetrennt wird.

3. Verfahren nach einem der vorhergehenden Ansprüche,
**dadurch gekennzeichnet,**
**dass** das photokatalytische Material einen Photokatalysator sowie ein Bindemittel umfasst.

4. Verfahren nach Anspruch 3,
**dadurch gekennzeichnet,**
**dass** das Bindemittel Silane umfasst.

5. Verfahren nach einem der vorhergehenden Ansprüche,
**dadurch gekennzeichnet,**
**dass** der Photokatalysator wenigstens eines der Elemente Sn, Zn, Bi, Ga, Ge, In, Ta, V, W, Sb oder TI umfasst und insbesondere Sn oder/und Zn umfasst.

6. Verfahren nach einem der vorhergehenden Ansprüche,
**dadurch gekennzeichnet,**
**dass** der Photokatalysator mit einem oder mehreren Elementen,
ausgewählt aus Co, C, N, P, S oder H dotiert ist oder/und dass der Photokatalysator mit einem oder mehreren Elementen, ausgewählt aus Pb, Au, Ag, Pt, Al, Cu, Sb, Mo, Fe oder Cd beladen ist.

7. Verfahren nach einem der vorhergehenden Ansprüche,
**dadurch gekennzeichnet,**
**dass** das photokatalytische Material auf einem Untergrund aufgebracht ist, insbesondere auf Glas, Metall, Baustoffen oder/und Keramik.

8. Verfahren nach einem der vorhergehenden Ansprüche,
**dadurch gekennzeichnet,**
**dass** das Verfahren zur Feinstaubreduktion in einem offenen System durchgeführt wird.

9. Verfahren nach einem der vorhergehenden Ansprüche,
**dadurch gekennzeichnet,**
**dass** es in Abwesenheit von Licht mit einer Wellenlänge < 350 nm durchgeführt wird.

10. Verfahren nach einem der vorhergehenden Ansprüche,
**dadurch gekennzeichnet,**
**dass** es sich bei dem Feinstaub um Partikel mit einem mittleren Partikeldurchmesser von ≤ 50 µm, insbesondere ≤ 100 nm handelt.

11. Verfahren zur Feinstaubreduktion nach einem der vorhergehenden Ansprüche,
**dadurch gekennzeichnet,**
**dass** Feinstaub aus Luft mittels einem auf Glasscheiben aufgebrachten photokatalytischen Material umfassend einen Photokatalysator ohne UV-Licht abgetrennt wird.

12. Verfahren nach Anspruch 11,
**dadurch gekennzeichnet,**
**dass** der Photokatalysator Partikelgrößen von < 300 nm aufweist.
